# EUROPEAN PATENT APPLICATION

(11) **EP 2 785 073 A1**
(43) Date of publication of application: **01.10.2014**
(21) Application number: 13776402.3
(22) Date of filing: 01.04.2013
(51) Int. Cl.: H04R 1/10

(54) **BLUETOOTH LISTENING DEVICE WITH DECORATIVE FUNCTION**

(30) Priority: 02.02.2013 CN 201320078326 U
(71) Applicant: Shenzhen Qintong Technology Limited, Shenzhen, Guangdong 518000 (CN)
(72) Inventor: ZHOU, Shengling, Futian Shenzhen, Guangdong 51800 (CN)
(74) Representative: Tergau & Walkenhorst
(86) International application number: PCT/CN2013/073544
(87) International publication number: WO 2014/117431

(57) **Abstract**

A Bluetooth receiving device with a decorative function includes a Bluetooth body and a decorative cover coupled to the Bluetooth body to form an ornament. The ornament may be a facial ornament, a brooch, a wristlet, a tie clip or an ornament retained to a user's personal belonging.

## Description

### FIELD OF THE INVENTION

The present invention relates to a Bluetooth device and, more particularly, to a Bluetooth receiving device with a decorative function.

### BACKGROUND

Bluetooth headsets provide audio information transmission in a wireless manner. However, current Bluetooth headsets generally have a monotonous style and only one single function.

### SUMMARY

An object of the present invention is to provide a Bluetooth receiving device with a decorative function, which can address the problem of monotonous style and singleness of function of the conventional Bluetooth receiving devices.

To achieve the above object, the present invention adopts the following technical solution.

A Bluetooth receiving device with a decorative function includes a Bluetooth body and a decorative cover. The decorative cover is coupled to the Bluetooth body to form an ornament.

The Bluetooth body includes a speaker, a Bluetooth main portion and a transmitter. The speaker and the transmitter are connected to the Bluetooth main portion.

In one embodiment, at least one of the speaker and the transmitter is connected to the Bluetooth main portion through a flexible connecting member. The flexible connecting member may be bendable in all directions to enable the at least one of the speaker and the transmitter to adapt to a shape of the ornament.

The Bluetooth main portion comprises a Bluetooth circuit board. In one embodiment, the decorative cover is directly coupled to the Bluetooth circuit board. In another embodiment, the Bluetooth main portion comprises the Bluetooth circuit board and a Bluetooth main portion housing coupled to the Bluetooth circuit board, and the Bluetooth main portion housing is coupled to the decorative cover. In one embodiment, the Bluetooth main portion housing is releasably coupled to the decorative cover.

In one embodiment, the Bluetooth main portion comprises at least one engaging portion, the decorative cover comprises at least one catch portion, and the Bluetooth body is coupled to the decorative cover by engagement of the at least one engaging portion of the Bluetooth main portion with the at least one catch portion of the decorative cover.

In one embodiment, the Bluetooth body is coupled to the decorative cover in a releasable manner. The releasable manner includes the manner of snap-fit coupling, magnetic coupling, Nylon tape fastening or adhering.

In one embodiment, the Bluetooth receiving device further includes a retaining member configured to couple to at least one of the Bluetooth body and the decorative cover to retain the combination of the Bluetooth and the decorative cover to a user or another object.

In one embodiment, the retaining member is coupled to the Bluetooth body and/or the decorative cover in a releasable manner. The releasable manner includes the manner of snap-fit coupling, magnetic coupling or Nylon tape fastening.

In some embodiments, the retaining member is in the form of a ring, a hook, a pin, a hanging chain or a clip. Depending upon the object to which the Bluetooth receiving device is retained or a status of the Bluetooth receiving device, the resulted ornament may be a facial ornament, a brooch, a wristlet, a tie clip or an ornament retained to a user's personal belonging.

Advantages of the present invention include that it is novel in conception, skillfully designed, convenient to use, beautiful and fashionable.

### BRIEF DESCRIPTION OF THE DRAWINGS

Fig. 1 shows a structure of the present invention.
Fig. 2 shows the catch portion and the magnetic catch portion of the present invention.

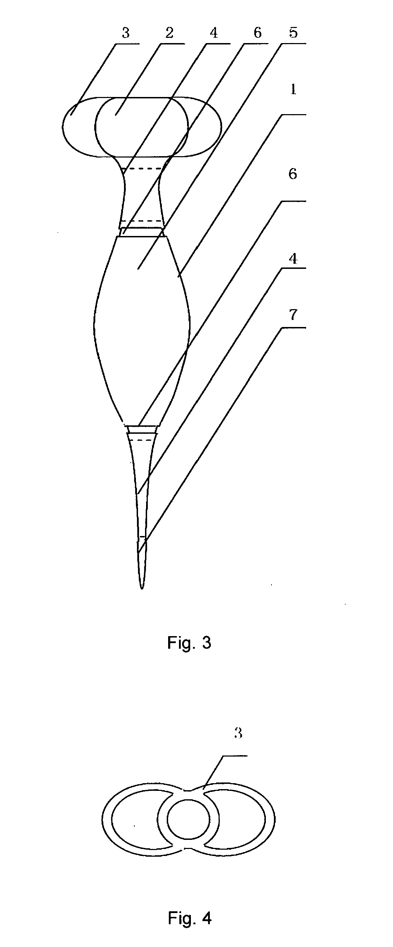

Fig. 3 shows the Bluetooth body of the present invention.
Fig. 4 shows the structure of the "8"-shaped speaker sleeve of the Bluetooth body of the present invention.
Fig. 5 is a side view of the Bluetooth body of the present invention.
Fig. 6 shows a structure of the retaining member of the present invention.

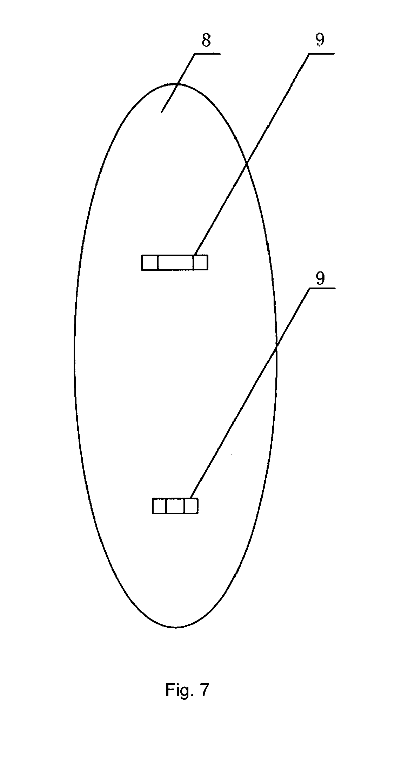

Fig. 7 shows a structure of the decorative cover of the present invention.
Fig. 8 shows the Bluetooth body and the decorative cover that are coupled in the manner of magnetic coupling.
Fig. 9 shows another manner of connection between the decorative cover and the Bluetooth body.

### DESCRIPTION OF THE EMBODIMENTS

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. For example, when it is described that a device A comprises a first B element and a second B element, unless specified or limited otherwise, this description does not exclude the possibilities that the device A may comprise a third B element or more B elements. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

Referring to the drawings, a Bluetooth receiving device with a decorative function includes a decorative cover 8, a Bluetooth body 1 and a retaining member 10. The decorative cover 8 may be in the shape of an animal, a plant, a cartoon character, a person, a mascot or a symbolic object. The decorative cover 8 and the Bluetooth body 1 are coupled together to form an ornament.

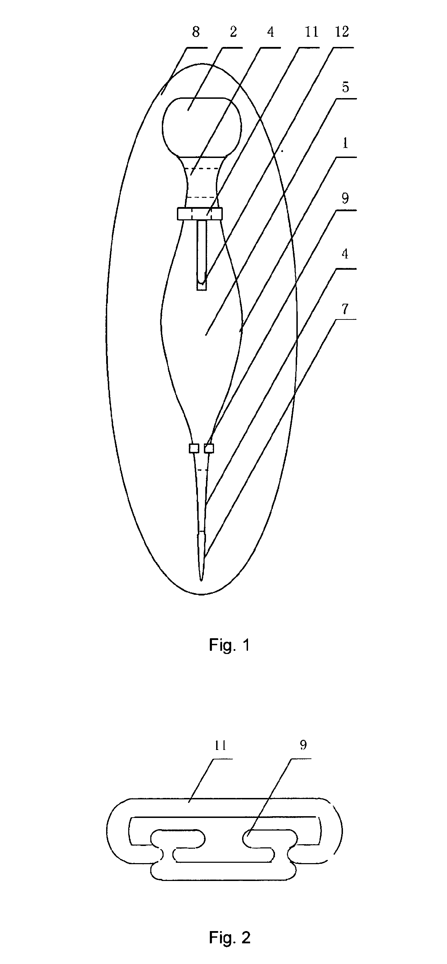

In the illustrated embodiment, the decorative cover 8 and the Bluetooth body 1 are releasably coupled together. For example, two catch portions 9 are formed on a rear side of the decorative cover 8. The Bluetooth body 1 includes a speaker 2, a Bluetooth main portion 5 and a transmitter 7. A speaker sleeve 3 in the shape of the figure "8" is attached around the speaker 2. It is to be understood that the speaker sleeve 3 may be of another shape, or the Bluetooth receiving device may even not include a speaker sleeve 3. Two ends of the Bluetooth main portion 5 are connected to at least one of the speaker 2 and the transmitter 7 through a flexible connecting member 4. In the embodiment illustrated in Fig. 1, each end of the Bluetooth main portion 5 is connected to a corresponding one of the speaker 2 and the transmitter 7 through one flexible connecting member 4. In a specific embodiment, the flexible connecting member 4 is bendable in all directions, such that the speaker 2 and the transmitter 7 can be bent in all directions to adapt to a shape of the decorative cover 8 to thereby form an ornament as desired.

In addition, the Bluetooth main portion 5 includes two engaging portions 6 positioned in correspondence with the two catch portions 9 of the decorative cover 8. The Bluetooth body 1 and the decorative cover 8 are coupled together by the engagement between the two engaging portions 6 of the Bluetooth main portion 5 and the two catch portions 9 of the decorative cover 8. In other embodiments, the Bluetooth main portion 5 may include one or more than two engaging portions 6, and the decorative cover 8 may include a corresponding number of the catch portions 9, such that the Bluetooth body 1 and the decorative cover 8 are coupled together by the engagement of the engaging portions 6 with the catch portions 9. Therefore, if the engagement of the engaging portions 6 with the catch portions 9 is used, there is no limit as to the number of the engaging portions 6 and the catch portions 9.

In alternative embodiments, the Bluetooth body 1 and the decorative cover 8 may also be coupled in another releasable manner. For example, the Bluetooth body 1 and the decorative cover 8 may also be coupled in the manner of magnetic coupling, snap-fit coupling, Nylon tape fastening or adhering.

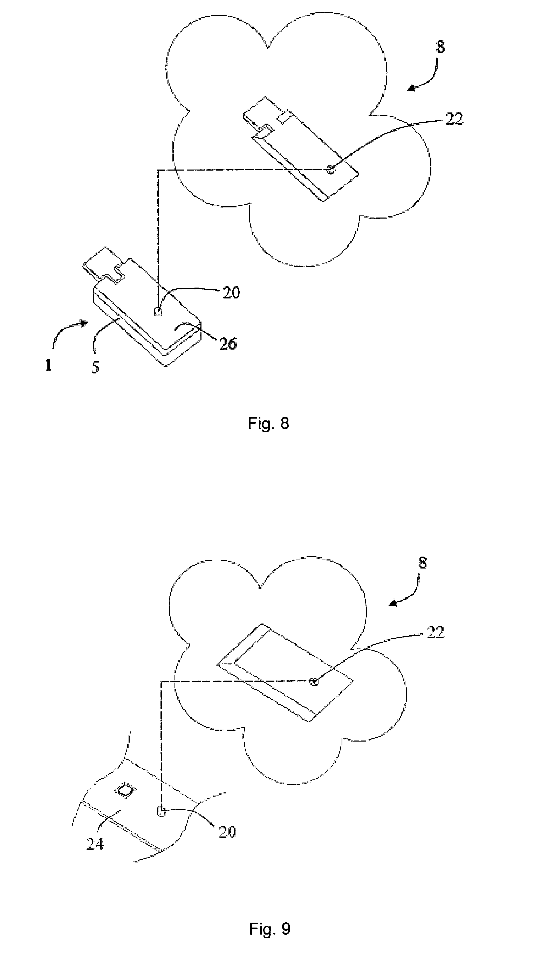

Fig. 8 illustrates the Bluetooth body 1 and the decorative cover 8 coupled together in the manner of magnetic coupling. The Bluetooth body 1 includes a first magnetic coupling portion 20, and the decorative cover 8 includes a second magnetic coupling portion 22. The Bluetooth body 1 and the decorative cover 8 are held together by the magnetic force between the first magnetic coupling portion 20 and the second magnetic coupling portion 22. The first magnetic coupling portion 20 and the second magnetic coupling portion 22 can have any construction and shape as long as the Bluetooth body 1 and the decorative cover 8 can be attracted together by the magnetic force between the first and second magnetic coupling portions 20, 22.

The decorative cover 8 may have any desired shape and structure. For example, in the embodiment illustrated in Fig. 8, the decorative cover 8 is in the shape of a flower. Once the flower-shaped decorative cover 8 is assembled with the Bluetooth body 1, a flower-shaped ornament is formed, which can be used as a brooch worn on a user's chest, a necklace pendant worn around a user's neck, an ear pendant hanging from a user's ear, a hanging ornament hanging on a bag. Because the decorative cover 8 is releasably coupled to the Bluetooth body 1, the user can freely change the decorative cover 8 to achieve a different ornament as the user wishes.

In the embodiment illustrated in Fig. 8, the Bluetooth main portion 5 includes a Bluetooth main portion housing 26 and a Bluetooth circuit board connected to the Bluetooth main portion housing 26. The Bluetooth circuit board is configured to perform call and music-listening function. In this embodiment, the Bluetooth circuit board is disposed within the Bluetooth main portion housing 26 and is thus invisible. The Bluetooth main portion housing 26 is coupled to the decorative cover 8 in the manner described above or in another suitable manner.

In another embodiment, the Bluetooth body 1 and the decorative cover 8 can be fixedly mounted together by, for example, screw-fastening.

In an alternative embodiment, as shown in Fig. 9, the decorative cover 8 is directly coupled to the Bluetooth circuit board 24 of the Bluetooth body 1. The Bluetooth circuit board 24 includes, for example, the first magnetic coupling portion 20, and the decorative cover 8 includes the second magnetic coupling portion 22 that is attracted to the first magnetic coupling portion 20 by the magnetic force therebetween. It is to be understood that the Bluetooth circuit board 24 and the decorative cover 8 can be coupled together in various other manners, such as, by screw-fastening or in any suitable releasable coupling manner described above.

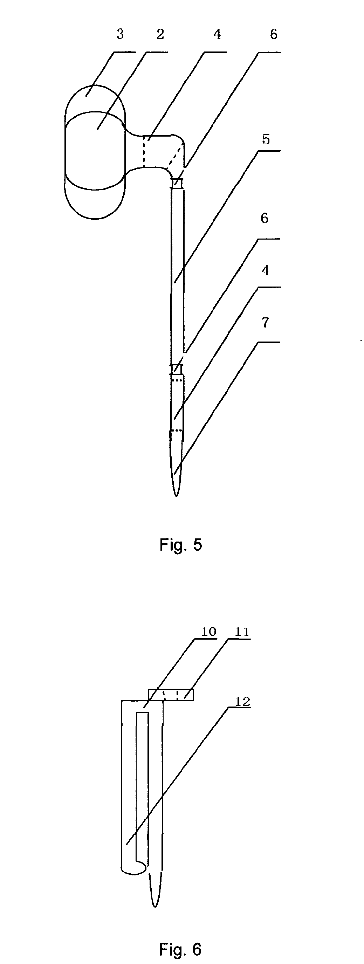

The retaining member 10 is configured to be connected to at least one of the Bluetooth body 1 and the decorative cover 8 to retain the combination of the Bluetooth body 1 and the decorative cover 8 to a user or another object. As shown in Fig. 1 and Fig. 6, in one embodiment, the retaining member 10 includes a magnetic catch portion 11 and a clip 12. The magnetic catch portion 11 is disposed on one side of a top of the clip 10. The magnetic catch portion 11 may engage with a top one of the catch portions 9 at the rear side of the decorative cover 8 to assemble the retaining member 10 and the decorative cover 8 together. The retaining member 10 can be attached to a user's clothes or bag such that the Bluetooth receiving device having the decorative cover can be used as an ornament.

In the embodiment illustrated in Fig. 1 and Fig. 6, the clip 10 is releasably coupled to the decorative cover 8 in the manner of magnetic coupling. It is to be understood that the clip 10 may also be coupled to the Bluetooth body 1 in the manner of magnetic coupling. It is also to be understood that the clip 10 may be coupled to at least one of the Bluetooth body 1 and the decorative cover 8 in any suitable releasable manner including, but not limited to, snap-fit coupling, magnetic coupling or Nylon tape fastening.

In using the Bluetooth receiving device illustrated in the drawings, because of the flexible connecting member that is bendable in all directions, one can bend the speaker close to his or her ear, hold the "8"-shaped speaker sleeve and insert the speaker into his or her ear. In addition, the speaker sleeve is in the shape of the figure "8", which makes the speaker breathable while supporting the speaker in the ear to prevent the entire device from falling out. The bendable transmitter also facilitates the calling through the Bluetooth receiving device, which can adapt to different face shapes. The decorative cover 8 can be of any shape (for example, the shape of a butterfly, a spider or a flag), which provides a good decorative effect when positioned at the user's ear. When the Bluetooth receiving device is not used, the speaker and transmitter can be returned to their original positions or positioned at appropriate positions to adapt to the shape of the decorative cover. The retaining member can be used to retain the Bluetooth receiving device to a necklace, a pocket of clothes, a collar, a bag strap, and so on, such that the Bluetooth receiving device can be used as a fashionable ornament.

In some embodiments, the retaining member may be in the form of a ring, a hook, a pin, a hanging chain or a clip to retain or wear the Bluetooth receiving device having the decorative cover to or on a user or a user's personal belonging, such as, a bag. Depending upon the object to which the Bluetooth receiving device is retained or a status of the Bluetooth receiving device, the resulted ornament may be a facial ornament, a brooch, a wristlet, a tie clip or an ornament retained to a user's personal belonging. Because of the releasable coupling, in the event of an incoming call, the Bluetooth receiving device with the decorative cover can be separated apart from the retaining member. If necessary, the speaker and/or the transmitter (which is bendable in all directions in some embodiments) can further be adjusted to an appropriate position to facilitate answering the call. When the Bluetooth receiving device is put on a user's ear, the Bluetooth receiving device having the decorative cover can be used as a facial ornament which is beautiful and fashionable.

In summary, the Bluetooth receiving device with a decorative function as described above can be used as a fashionable ornament in addition to providing the common function of the Bluetooth receiving device, which is convenient to use, practical, beautiful and fashionable.

It will be apparent to those skilled in the art that various modifications and variations can be made to the disclosed structure without departing from the scope or spirit of the invention. In view of the foregoing, it is intended that the present invention cover modifications and variations of this invention provided they fall within the scope of the following claims and their equivalents.

## Claims

1. A Bluetooth receiving device with a decorative function, comprising a Bluetooth body, **characterized in that** the Bluetooth receiving device comprises a decorative cover coupled to the Bluetooth body to form an ornament.

2. The Bluetooth receiving device according to claim 1, wherein the Bluetooth body comprises a speaker, a Bluetooth main portion and a transmitter, and the speaker and the transmitter are connected to the Bluetooth main portion.

3. The Bluetooth receiving device according to claim 2, wherein at least one of the speaker and the transmitter is connected to the Bluetooth main portion through a flexible connecting member.

4. The Bluetooth receiving device according to claim 3, wherein the flexible connecting member is bendable in all directions to adapt to a shape of the ornament.

5. The Bluetooth receiving device according to claim 2, wherein the Bluetooth main portion comprises a Bluetooth circuit board, and the decorative cover is directly coupled to the Bluetooth circuit board.

6. The Bluetooth receiving device according to claim 2, wherein the Bluetooth main portion comprises a Bluetooth circuit board and a Bluetooth main portion housing coupled to the Bluetooth circuit board, and the Bluetooth main portion housing is coupled to the decorative cover.

7. The Bluetooth receiving device according to claim 6, wherein the Bluetooth main portion housing is coupled to the decorative cover in a releasable manner.

8. The Bluetooth receiving device according to claim 2, wherein the Bluetooth main portion comprises at least one engaging portion, the decorative cover comprises at least one catch portion, and the Bluetooth body is coupled to the decorative cover by engagement of the at least one engaging portion of the Bluetooth main portion with the at least one catch portion of the decorative cover.

9. The Bluetooth receiving device according to claim 2, wherein the Bluetooth body is coupled to the decorative cover in a releasable manner.

10. The Bluetooth receiving device according to claim 7 or 9, wherein the releasable manner comprises the manner of snap-fit coupling, magnetic coupling, Nylon tape fastening or adhering.

11. The Bluetooth receiving device according to claim 1, further comprising a retaining member configured to couple to at least one of the Bluetooth body and the decorative cover to retain the combination of the Bluetooth and the decorative cover to a user or another object.

12. The Bluetooth receiving device according to claim 11, wherein the retaining member is coupled to the Bluetooth body and/or the decorative cover in a releasable manner.

13. The Bluetooth receiving device according to claim 12, wherein the releasable manner comprises the manner of snap-fit coupling, magnetic coupling or Nylon tape fastening.

14. The Bluetooth receiving device according to claim 11, wherein the retaining member is in the form of a ring, a hook, a pin, a hanging chain or a clip.

15. The Bluetooth receiving device according to claim 1, wherein the ornament comprises a facial ornament, a brooch, a wristlet, a tie clip or an ornament retained to a user's personal belonging.
